# EUROPÄISCHE PATENTSCHRIFT

(11) **EP 3 789 280 B1**
(45) Veröffentlichungstag und Bekanntmachung des Hinweises auf die Patenterteilung: **22.09.2021**
(21) Anmeldenummer: 20193682.0
(22) Anmeldetag: 31.08.2020
(51) Int. Cl.: B62D 65/02

(54) **KONSOLENELEMENT, SYSTEM MIT EINEM KONSOLENELEMENT, UND VERFAHREN ZUM VERBINDEN EINES KONSOLENELEMENTS MIT EINEM FAHRZEUGBODEN EINES FAHRZEUGS**
CONSOLE ELEMENT, SYSTEM WITH A CONSOLE ELEMENT, AND METHOD FOR CONNECTING A CONSOLE ELEMENT TO THE FLOOR OF A VEHICLE
ÉLÉMENT DE CONSOLE, SYSTÈME POURVU D'ÉLÉMENT DE CONSOLE ET PROCÉDÉ DE LIAISON D'UN ÉLÉMENT DE CONSOLE À UN PLANCHER D'UN VÉHICULE

(30) Priorität: 04.09.2019 DE 102019213434; 16.10.2019 DE 102019215944
(43) Veröffentlichungstag der Anmeldung: 10.03.2021
(73) Patentinhaber: VOLKSWAGEN AKTIENGESELLSCHAFT, 38440 Wolfsburg (DE)
(72) Erfinder: Wadim, Gasmann, 38547 Calberlah (DE); Grimbach, Thomas, 30161 Hannover (DE)
(74) Vertreter: Schulz Junghans Patentanwälte PartGmbB

(56) Entgegenhaltungen:
- DE-A1- 19 953 958
- DE-A1-102010 041 048
- DE-A1-102015 201 412
- US-A- 5 106 143
- US-A1- 2005 236 859
- US-A1- 2016 257 266

## Beschreibung

Die Erfindung betrifft ein Konsolenelement zum Verbinden mit einem Fahrzeugboden eines Fahrzeugs, mit einem Grundkörper, der einen Grundkörperboden und Grundkörperseitenwände aufweist, und mit vorderen Verbindungselementen und hinteren Verbindungselementen, die jeweils an einer Unterseite des Grundkörperbodens angeordnet sind und mittels einer horizontalen Bewegung des Grundkörpers entlang einer Fügerichtung in an dem Fahrzeugboden des Fahrzeugs angeordnete Aufnahmen eingeschoben werden können. Weiterhin betrifft die Erfindung ein System mit einem solchen Konsolenelement, einem vorderen Befestigungswinkel und einem hinteren Befestigungswinkel sowie ein Verfahren zum Verbinden eines Konsolenelements mit einem Fahrzeugboden eines Fahrzeugs. Ergänzt wird die vorliegende Erfindung durch ein Kraftfahrzeug mit dem Konsolenelement bzw. dem erfindungsgemäßen System.

Die Endmontage von Fahrzeugen ist heutzutage bereits zu einem gewissen Teil automatisiert und wird entsprechend teilweise von automatischen Robotern an einer Montagestrecke durchgeführt. Der überwiegende Teil der Montagearbeiten wird aber weiterhin von menschlichen Werkern ausgeführt. Die Gründe hierfür sind relativ vielfältig. Zum einen wird ein großer Teil der Arbeiten innerhalb der Karosserie des Fahrzeugs durchgeführt, was die Zugänglichkeit für einen Roboter, dessen Basis sich außerhalb der Karosserie befindet, erschwert. Weiterhin ist eine automatisierte Fertigung, die die notwendige Genauigkeit aufweist und entsprechende Toleranzen einhält, sensorisch und regelungstechnisch sehr aufwendig, sodass der Einsatz von menschlichen Werkern für viele Prozessschritte aktuell sicherer und kostengünstiger ist.

Insbesondere im Bereich der Mittelkonsole hat bisher keine nennenswerte Automatisierung in der Automobilproduktion stattgefunden. Die Mittelkonsole ist ein relativ großes Bauteil, das darüber hinaus komplex aufgebaut sein kann und meistens eine Vielzahl von Einzelelementen wie Staufächer, Belüftungselemente, Bedienelemente und Beleuchtungselemente aufweist. Da sich die Mittelkonsole zentral im Fahrzeug und somit direkt im Blickfeld der Benutzer befindet, sind die möglichen Toleranzen bei der Fertigung hier relativ klein, um optisch ansprechende Spaltmaße zu gewährleisten.

Die aus dem Stand der Technik bekannten Mittelkonsolen sowie Verfahren zum Befestigen der Mittelkonsole am Fahrzeugboden benötigen zur Feinpositionierung allesamt die Unterstützung eines menschlichen Arbeiters. So ist beispielsweise aus der US 5 106 143 eine Mittelkonsole bekannt, die ein vorderes, plattenförmiges Verbindungselement aufweist, das in ein korrespondierendes, auf dem Fahrzeugboden festgelegtes Klammerelement eingeführt werden kann und dann dort verrastet wird. Nachdem das vordere Verbindungselement eingerastet ist wird eine Schwenkbewegung um das vordere Verbindungselement herum ausgeführt, wodurch zwei im hinteren Bereich nach unten abstehende weitere Verbindungselemente in entsprechende am Fahrzeugboden festgelegte Aufnahmen einschnappen. Das Verfahren ist für eine Automatisierung höchstens bedingt geeignet, da die Positionierung der einzubauenden Mittelkonsole insbesondere quer zur Fahrtrichtung äußerst genau eingestellt und überwacht werden muss, damit ein ordnungsgemäßes Einrasten aller Verbindungselemente sichergestellt wird.

Die US 2005/0236859 A1 beschreibt ein Konsolenelement, das an seiner Unterseite Clipelemente aufweist, die in entsprechend ausgestaltete Öffnungen, welche an an dem Fahrzeugboden befestigten Halteklammern angebracht sind, eingreifen können. Die Clipelemente werden durch an einem inneren Bodenelement angebrachte Stiftelemente gesichert. Auch bei dem Einbau dieses Konsolenelements ist vor dem Zusammenfügen eine sehr genaue Positionierung und Ausrichtung der einzelnen Elemente übereinander notwendig.

Es ist daher Aufgabe der Erfindung, eine Mittelkonsole, ein die Mittelkonsole umfassendes System sowie ein Verfahren zum Einbau einer Mittelkonsole anzugeben, die einen höheren Grad an Automatisierung zulassen und insbesondere eine hohe Genauigkeit bei der Endpositionierung der Mittelkonsole in dem Fahrzeug ermöglichen.

Die Aufgabe wird gelöst durch ein Konsolenelement der eingangs beschriebenen Art, bei dem die vorderen Verbindungselemente und die hinteren Verbindungselemente selbstzentrierend ausgestaltet sind. Die Aufgabe wird weiterhin gelöst durch ein System mit einem solchen Konsolenelement, einem vorderen Befestigungswinkel und einem hinteren Befestigungswinkel, sowie durch ein Verfahren zum Verbinden eines Konsolenelements mit einem Fahrzeugboden.

Ergänzend wird ein Kraftfahrzeug mit der Mittelkonsole bzw. dem die Mittelkonsole umfassenden System zur Verfügung gestellt.

Ein erster Aspekt der Erfindung ist ein Konsolenelement zum Verbinden mit einem Fahrzeugboden eines Fahrzeugs, mit einem Grundkörper, der einen Grundkörperboden und Grundkörperseitenwände aufweist, und mit vorderen Verbindungselementen und hinteren Verbindungselementen, die jeweils an einer Unterseite des Grundkörperbodens angeordnet sind und mittels einer horizontalen Bewegung des Grundkörpers entlang einer Fügerichtung in an dem Fahrzeugboden des Fahrzeugs angeordnete Aufnahmen eingeschoben werden können, wobei die vorderen Verbindungselemente und die hinteren Verbindungselemente selbstzentrierend ausgestaltet sind.

Insbesondere kann das Konsolenelement zum Verbinden mit einem Fahrzeugboden eines Fahrzeugs mit einem Grundkörper ausgestattet sein, der einen Grundkörperboden und Grundkörperseitenwände aufweist, und mit wenigstens einem vorderen Verbindungselement und wenigstens einem hinteren Verbindungselement ausgestattet sein, die an einer Unterseite des Grundkörperbodens angeordnet sind und mittels einer Bewegung des Grundkörpers entlang einer Fügerichtung in an dem Fahrzeugboden des Fahrzeugs angeordnete Aufnahmen eingeschoben werden können. Es ist vorgesehen, dass das vordere Verbindungselement und das hintere Verbindungselement selbstzentrierend ausgestaltet sind.

Die Fügerichtung kann auch als Montagerichtung bezeichnet werden. Die selbstzentrierende Wirkung des jeweiligen Verbindungselements bezieht sich auf seine jeweilige Position in Bezug zur jeweiligen Aufnahme. Die Bewegung des Grundkörpers kann insbesondere in horizontaler Richtung erfolgen.

Das erfindungsgemäße Konsolenelement hat den Vorteil, dass es zuverlässig mit geringer Toleranz an einer vorgegebenen Endposition platziert werden kann, ohne dass aufwändige Kontrollmechanismen oder eine äußerst präzise Handhabung des Konsolenelements beim Einbau notwendig wären. Die Ausgestaltung des Konsolenelements an sich bewirkt dabei bereits das präzise Erreichen der Endposition, obwohl die eigentliche Handhabung des Konsolenelements mit geringerer Genauigkeit erfolgen kann. Das Konsolenelement ist daher geeignet, um vollautomatisch, beispielsweise von einem Roboter, montiert und somit mit dem Fahrzeugboden verbunden zu werden.

Gemäß einer vorteilhaften Ausgestaltung sind die vorderen Verbindungselemente und die hinteren Verbindungselemente sowohl in einer horizontalen Richtung als auch in einer vertikalen Richtung selbstzentrierend ausgestaltet. Entsprechend ist die Endposition des Konsolenelements auch in einer horizontalen Richtung und in einer vertikalen Richtung durch die Form des Konsolenelements bzw. durch die Form der Verbindungselemente festgelegt. Die horizontale Richtung kann dabei ebenso wie die vertikale Richtung senkrecht zu der Fügerichtung ausgerichtet sein. Entlang der Fügerichtung kann die Position durch einen einfachen Anschlag oder ein Rastelement bestimmt sein. Insbesondere in vertikaler Richtung kann die Endposition des Konsolenelements aber auch auf einfache Art und Weise durch die Form des Konsolenelements bestimmt sein, so dass die Position durch eine Kombination der horizontalen Fügebewegung und der Schwerkraft, die zu einer vertikalen Bewegung führt, erreicht wird.

In einer bevorzugten Ausführungsform sind die vorderen Verbindungselemente und/oder die hinteren Verbindungselemente derart ausgestaltet, dass sich eine Breite einer Aufnahmeöffnung der vorderen Verbindungselemente und/oder eine Breite einer Aufnahmeöffnung der hinteren Verbindungselemente entlang einer Fügerichtung von einem vorderen Bereich zu einem hinteren Bereich hin verkleinert.

Entsprechend kann auch vorgesehen sein, dass das vordere Verbindungselement und/oder das hintere Verbindungselement derart ausgestaltet ist, dass sich eine Breite einer Aufnahmeöffnung des jeweiligen Verbindungselements entlang der Fügerichtung von einem vorderen Bereich zu einem hinteren Bereich hin verkleinert.

Die Verbindungselemente bzw. die Aufnahmeöffnungen der Verbindungselemente können also eine Keilform aufweisen. Entsprechend weisen die jeweiligen Aufnahmeöffnungen der Verbindungselemente entlang der Fügerichtung gesehen in einem vorderen Bereich einen geringeren Querschnitt auf als in einem hinteren Bereich. Mit anderen Worten laufen die Aufnahmeöffnungen dann zum hinteren Bereich hin spitz zu, so dass sie mit dem vorderen Ende beispielsweise in eine Öffnung eingeführt werden können, die eine Größe aufweist, die einen Querschnitt des entsprechenden Verbindungselements in einem hinteren Bereich entspricht.

Alternativ oder hinzukommend können die Verbindungselemente selbst ebenfalls keilförmig ausgestaltet sein, wobei sich in diesem Fall der Querschnitt oder die Breite des Verbindungselements von einem vorderen Bereich zu einem hinteren Bereich hin vergrößert. Die Verbindungselemente können dann in eine an dem Fahrzeugboden vorhandene Aufnahme eingeführt werden, wobei sich das mögliche Spiel des Verbindungselements innerhalb der Aufnahme während des Fügevorgangs verringert.

Das Einführen in die Öffnung erlaubt dabei eine relativ große Ungenauigkeit bei der Einführungsbewegung, da die Öffnung deutlich größer als der Querschnitt des Verbindungselements im vorderen Bereich ist. Während der Fügebewegung gleitet eine Außenfläche des Verbindungselements dann an einer Kante der Öffnung entlang, wenn das Verbindungselement nicht von vornherein exakt zentral in die Öffnung eingeführt wurde, so dass sich das gesamte Konsolenelement quer zur Fügerichtung bewegt und somit zentriert wird.

Die Aufnahmeöffnungen der Verbindungselemente können dabei derart ausgestaltet sein, dass an dem Fahrzeugboden oder an einer an dem Fahrzeugboden angeordneten Struktur, beispielsweise an vorderen und/oder an hinteren Befestigungswinkeln, angeordnete korrespondierende Befestigungselemente während einer Fügebewegung in die Aufnahmeöffnungen eindringen können, so dass dann eine form- und/oder reibschlüssige Verbindung zwischen den an dem Konsolenelement angeordneten Verbindungselementen und den an dem Fahrzeugboden angeordneten Befestigungselementen hergestellt wird. Alternativ können die Aufnahmeöffnungen natürlich auch an dem Fahrzeugboden angeordnet sein und wie oben bereits beschrieben ausgestaltet sein. Es ergibt sich dann ebenfalls der Selbstzentrierungseffekt.

Die Verbindungselemente können dabei derart ausgestaltet sein, dass die Breite der Aufnahmeöffnungen zumindest abschnittsweise kontinuierlich abnimmt. Die Aufnahmeöffnungen können beispielsweise keilförmig bzw. trichterförmig ausgestaltet sein oder die Grundform eines Schlüssellochs aufweisen.

Gemäß einer Weiterbildung der Erfindung nehmen die vorderen Verbindungselemente und/oder die hinteren Verbindungselemente entlang der Fügerichtung in ihrer vertikalen Ausdehnung zu, so dass während eines Fügevorgangs eine Selbstzentrierung des Konsolenelements in einer vertikalen Richtung erfolgt. Es kann dadurch erreicht werden, dass sich während des Fügevorgangs ein vertikales Spiel zwischen dem an dem Konsolenelement angeordneten Verbindungselementen und den an dem Fahrzeugboden angeordneten Verbindungselementen reduziert. Die an dem Konsolenelement angeordneten Verbindungselemente können dabei während der horizontalen Fügebewegung auf den an dem Fahrzeugboden angeordneten Verbindungselementen aufreiten.

Allgemein kann die Mittelkonsole derart ausgestaltet sein, dass die vorderen Verbindungselemente und/oder die hinteren Verbindungselemente entlang der Fügerichtung in ihrer Ausdehnung im Wesentlichen senkrecht zur Fügerichtung zunehmen, so dass während eines Fügevorgangs eine Selbstzentrierung des Konsolenelements in einer zur Fügerichtung im Wesentlichen senkrechten Richtung erfolgt.

Der Fügevorgang kann auch als Montagevorgang bezeichnet werden.

Eine spezielle Ausgestaltung der Erfindung zeichnet sich durch in einem mittleren Bereich der Unterseite des Grundkörperbodens angeordnete mittlere Verbindungselemente aus, die gleichartig zu den vorderen Verbindungselementen und/oder gleichartig zu den hinteren Verbindungselementen ausgestaltet sind. Es kann so durch die zusätzlichen Verbindungselemente eine noch sicherere Verbindung zwischen dem Konsolenelement und dem Fahrzeugboden erreicht werden.

Das heißt, dass sich die Mittelkonsole allgemein durch wenigstens ein in einem im Wesentlichen mittleren Bereich der Unterseite des Grundkörperbodens angeordnetes mittleres Verbindungselement auszeichnen kann, das gleichartig zu dem vorderen Verbindungselement oder gleichartig zu dem hinteren Verbindungselement ausgestaltet ist.

Das bedeutet, dass das mittlere Verbindungselement ebenfalls an der Unterseite des Grundkörperbodens angeordnet ist und mittels einer Bewegung des Grundkörpers entlang einer Fügerichtung bzw. Montagerichtung in eine an dem Fahrzeugboden des Fahrzeugs angeordnete Aufnahme eingeschoben werden kann, wobei das mittlere Verbindungselement hinsichtlich seiner jeweiligen Position in Bezug zur Aufnahme selbstzentrierend ausgestaltet ist.

Eine Weiterbildung der Erfindung sieht vor, dass das Konsolenelement Aufnahmen für Schrauben, oder allgemein für mechanische Verbindungsmittel, aufweist, mittels derer das Konsolenelement an einem Fahrzeugboden festgelegt werden kann, wobei jede Aufnahme eine Durchgangsrichtung aufweist, und wobei die Aufnahmen derart ausgerichtet sind, dass alle Durchgangsrichtungen der Aufnahmen parallel zueinander verlaufen. Es können dann mehrere Schrauben oder alle Schrauben gleichzeitig befestigt werden, ohne dass ein Werkzeug oder mehrere Werkzeuge aus verschiedenen Richtungen angreifen müssten.

Eine weitere Ausgestaltung zeichnen sich dadurch aus, dass das Konsolenelement zumindest eine Schraube, oder allgemein ein mechanisches Verbindungsmittel, aufweist, die bzw. das eine Mehrzahl von Einzelteilen des Konsolenelements miteinander verbindet und gleichzeitig dazu eingerichtet ist, das Konsolenelement an dem Fahrzeugboden festzulegen. Es wird so die Anzahl der Arbeitsschritte, die zur Befestigung des Konsolenelements an dem Fahrzeugboden notwendig sind, verringert, da die Anzahl der anzuziehenden Schrauben verringert wird. Es wird somit eine Verkürzung der potentiellen Montagezeit erreicht. Mit anderen Worten werden bei dieser Ausführungsform mehrere Einzelbauteile auf eine relativ lange Schraube aufgefädelt und gleichzeitig durch Anziehen der Schraube fixiert. Die Schraube kann dabei auch das zuunterst angeordnete Einzelbauteil des Konsolenelements durchdringen und alle aufgefädelten Bauteile gemeinsam an dem Fahrzeugboden festlegen.

Um einen sicheren Sitz des Konsolenelements in der vorgegebenen Endposition zu erreichen, kann das Konsolenelement derart ausgestaltet sein, dass die Verbindungselemente Rastelemente aufweisen. Die Verbindungselemente können dann bei Erreichen der vorgegebenen Endposition in entsprechend ausgestaltete korrespondierende Aufnahmen oder sonstige Verbindungselemente bzw. Befestigungselemente, die an dem Fahrzeugboden oder an an dem Fahrzeugboden angeordneten Befestigungswinkeln angeordnet sind, einrasten.

Gemäß einer Weiterbildung der Erfindung weist das Konsolenelement ein elektrisches Kabel auf, das ein elektrisches Verbindungselement in Form eines Steckers oder einer Buchse aufweist, welches entlang der Fügerichtung ausgerichtet ist, und das von einer Halterung gehalten wird, die derart ausgestaltet ist, dass das elektrische Verbindungselement in einer horizontalen Richtung und/oder in einer vertikalen Richtung in einem kleinen Bereich beweglich ist.

Insbesondere weist das Konsolenelement ein elektrisches Kabel auf, das das mit einem elektrischen Verbindungselement in Form eines Steckers oder einer Buchse verbunden ist, welches entlang der Fügerichtung ausgerichtet ist, und das von einer Halterung gehalten wird, die derart ausgestaltet ist, dass das elektrische Verbindungselement in wenigstens einer quer zur Fügerichtung verlaufenden Richtung in einem Bereich von zumindest 1 mm beweglich ist.

Es wird so möglich, dass neben der mechanischen Verbindung zwischen dem Konsolenelement und dem Fahrzeug auch eine elektrische bzw. elektronische Verbindung hergestellt wird.

Hierzu ist eine Ausgestaltung besonders geeignet, gemäß der das elektrische Verbindungselement von einer Halterung gehalten wird, die derart ausgestaltet ist, dass das elektrische Verbindungselement in einer horizontalen Richtung und/oder in einer vertikalen Richtung in einem kleinen Bereich beweglich ist. Insbesondere wenn das elektrische Verbindungselement gleichzeitig derart ausgestaltet ist, dass es mit korrespondierenden Anweiserelementen zusammenwirken kann, um während der Fügebewegung eine Selbstzentrierung zu erreichen, ist eine solche Ausgestaltung geeignet, um das Konsolenelement automatisch mit Hilfe eines Roboters in das Fahrzeug einzubauen und dabei ebenfalls automatisch die elektrische Verbindung herzustellen. Die Beweglichkeit des elektrischen Verbindungselements, beispielsweise also eines Steckers oder einer Buchse, kann dabei in alle Richtungen quer zur Fügerichtung zumindest 1 mm, bevorzugt zumindest 2 mm und besonders bevorzugt zumindest 4 mm betragen.

Ein weiterer Aspekt der vorliegenden Erfindung ist ein System mit einem erfindungsgemäßen Konsolenelement, wobei die Aufnahmen durch einen vorderem Befestigungswinkel und einen hinterem Befestigungswinkel zur Verbindung des Konsolenelements mit einem Fahrzeugboden eines Fahrzeugs ausgebildet sind. Es ist vorgesehen, dass zumindest eines der beiden Bauteile von vorderem Befestigungswinkel und vorderem Verbindungselement bzw. hinterem Befestigungswinkel und hinterem Verbindungselement jeweils Anweiserflächen aufweisen, die mit dem jeweils anderem Bauteil derart zusammenwirken, dass während eines Fügevorgangs eine Selbstzentrierung des Konsolenelements erfolgt.

Zudem wird zur Lösung der Aufgabe ein erfindungsgemäßes System mit einem erfindungsgemäßen Konsolenelement zur Verfügung gestellt, , wobei die Aufnahmen durch einen vorderem Befestigungswinkel und einen hinterem Befestigungswinkel zur Verbindung des Konsolenelements mit einem Fahrzeugboden eines Fahrzeugs ausgebildet sind, wobei der vordere Befestigungswinkel und der hintere Befestigungswinkel jeweils Anweiserflächen aufweisen, die jeweils mit den vorderen Verbindungselementen des Konsolenelements bzw. mit den hinteren Verbindungselementen des Konsolenelements derart zusammenwirken, dass während eines Fügevorgangs im Wesentlichen entlang der Fügerichtung (x) eine Selbstzentrierung des Konsolenelements erfolgt.

Insbesondere erfolgt eine Selbstzentrierung hinsichtlich der Position des Konsolenelements in Bezug zum Fahrzeugboden des Fahrzeugs.

Hierzu können die Befestigungswinkel einzeln oder jeweils derart ausgestaltet sein, dass die Öffnung, in die die Verbindungselemente des Konsolenelements eingeführt werden, dreidimensional mit entsprechenden Anweiserflächen ausgestaltet ist. Es können also beispielsweise Anweiserelemente vorhanden sein, die innere Oberflächen aufweisen, die in einem Winkel, vorzugsweise in einem spitzen Winkel, beispielsweise in einem Winkel zwischen 5° und 40° relativ zu der Fügerichtung, verlaufen. An diesen Anweiserelementen können die Verbindungselemente des Konsolenelements dann abgleiten, sodass die zuvor bereits angesprochene Selbstzentrierung durchgeführt wird.

Gemäß einer Weiterbildung des erfindungsgemäßen Systems weist der vordere Befestigungswinkel und/ oder der hintere Befestigungswinkel eine Halterung für ein zu dem elektrischen Verbindungselement des Konsolenelements komplementäres, zweites elektrisches Verbindungselement auf. Gleichzeitig kann die Halterung Anweiserelemente zum Zentrieren des elektrischen Verbindungselements des Konsolenelements während des Fügevorgangs aufweisen. Das System ermöglicht dann das vollautomatische Stecken eines elektrischen Kabels während des Fügevorgangs.

Ein erfindungsgemäßes Verfahren zum Verbinden eines Konsolenelements, insbesondere eines erfindungsgemäßen Konsolenelements, mit einem Fahrzeugboden weist die folgenden Schritte auf:
a. Verbinden eines nach oben offenen Grundkörpermoduls, das an einer Unterseite des Grundkörpermoduls Verbindungselemente zum Verbinden des Grundkörpermoduls zumindest mittelbar mit dem Fahrzeugboden aufweist, indem eine horizontale Fügebewegung entlang einer Fügerichtung ausgeführt wird,
b. Herstellen einer elektrischen Verbindung zwischen zumindest einem in dem Grundkörpermodul angeordnetem Kabel und einem in dem Fahrzeug angeordneten Kabel,
c. Verbinden eines Innenmoduls, das zumindest ein Staufach mit einem Staufachboden aufweist, mit dem Grundmodul, wobei sich der Staufachboden nach dem Verbinden in der Nähe des Grundkörperbodens befindet.

In einer Ausführungsform kann das Verbinden des Grundkörpermoduls mit dem Fahrzeugboden mittelbar erfolgen.

Ein solches Verfahren hat den Vorteil, dass eine weitgehende Modularisierung des Konsolenelements vorgenommen werden kann, ohne dass Schwierigkeiten bei der Verkabelung bzw. elektrischen Versorgung vorhandener Verbraucher auftreten. So kann das Grundkörpermodul beispielsweise ein Modul wie weiter oben beschrieben sein und mit Hilfe von selbst zentrierenden Verbindungselementen an dem Fahrzeugboden befestigt werden. Bevor das Innenmodul eingefügt wird können nun Steckverbindungen hergestellt oder sonstige Kabelarbeiten vorgenommen werden. Dadurch dass das Staufach nicht bereits gemeinsam mit dem Grundkörper Modul eingebaut wird verbleibt genügend Freiraum, um die angesprochenen Arbeiten an der Elektrik auszuführen. Das Staufach weist eine Tiefe auf, die einen großen Teil der Höhe des Grundkörpermoduls einnimmt.

Ein weiterer Aspekt der vorliegenden Erfindung ist ein Kraftfahrzeug, insbesondere ein Personenkraftwagen, welches ein erfindungsgemäßes Konsolenelement oder ein erfindungsgemäßes System mit einem Konsolenelement aufweist.

Ausführungsbeispiele der Erfindung werden anhand der Zeichnungen und der nachfolgenden Beschreibung näher erläutert. Es zeigen:
- Fig. 1:: ein erstes Ausführungsbeispiel eines erfindungsgemäßen Konsolenelements,
- Fig. 2:: einen vorderen Befestigungswinkel in einer vergrößerten Darstellung,
- Fig. 3:: einen hinteren Befestigungswinkel in einer vergrößerten Darstellung,
- Fig. 4:: ein zweites Ausführungsbeispiel eines erfindungsgemäßen Konsolenelements,
- Fig. 5:: ein drittes Ausführungsbeispiel eines erfindungsgemäßen Konsolenelements,
- Fig. 6:: ein viertes Ausführungsbeispiel eines erfindungsgemäßen Konsolenelements,
- Fig. 7:: das vierte Ausführungsbeispiel in einer Einbauphase,
- Fig. 8:: das vierte Ausführungsbeispiel in einer Einbauendphase,
- Fig. 9:: ein fünftes Ausführungsbeispiel eines erfindungsgemäßen Konsolenelements,
- Fig. 10:: ein sechstes Ausführungsbeispiel eines erfindungsgemäßen Konsolenelements,
- Fig. 11:: einen hinteren Bereich eines siebten Ausführungsbeispiels einer erfindungsgemäßen Mittelkonsole,
- Fig. 12:: einen Buchsenhalter,
- Fig. 13:: den Buchsenhalter aus Figur 12 in einem Schnitt in einer Seitenansicht,
- Fig. 14:: einen Ausschnitt eines Bodenelements eines erfindungsgemäßen Konsolenelements, und
- Fig. 15:: eine weitere Ausführungsvariante eines solchen Verbindungselements,
- Fig. 16:: das Verbindungselement aus Figur 15 in einer geschnittenen Draufsicht,
- Fig. 17:: das Verbindungselement aus Figur 15 in einer geschnittenen Seitenansicht,
- Fig. 18:: eine alternative Ausführung des hinteren Verbindungselements,
- Fig. 19:: eine Detaildarstellung des fünften Ausführungsbeispiels, und
- Fig. 20:: eine geschnittene Draufsicht auf das fünfte Ausführungsbeispiel

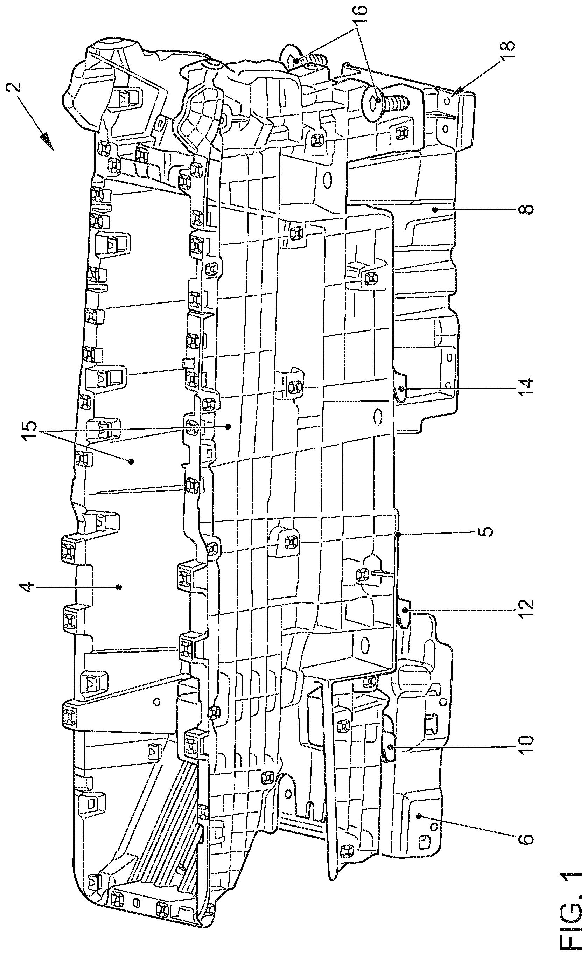

Figur 1 zeigt ein erstes Ausführungsbeispiel eines erfindungsgemäßen Konsolenelements 2 in Form einer Mittelkonsole in einer schematischen Ansicht von schräg oben. Die Mittelkonsole weist einen Grundkörper 4 auf, der aus einem Kunststoff hergestellt ist. Der Grundkörper 4 weist Seitenwände 15 sowie einen Grundkörperboden 5 auf. An der Unterseite des Grundkörperbodens 5 sind ein vorderes Verbindungselement 10, ein mittleres Verbindungselement 12 sowie ein hinteres Verbindungselement 14 erkennbar. Sie ragen vorsprungartig nach unten aus dem Grundkörperboden 5 heraus und sind im dargestellten Ausführungsbeispiel an der linken Unterseite der Mittelkonsole angeordnet. Analog sind auch im rechten Randbereich an der Unterseite der Mittelkonsole entsprechende Verbindungselemente vorhanden, welche aufgrund der gewählten Perspektive in Figur 1 aber nicht sichtbar sind.

Weiterhin zu erkennen sind ein vorderer Befestigungswinkel 6 und ein hinterer Befestigungswinkel 8, die jeweils fest mit dem nicht dargestellten Fahrzeugboden verbunden sind. Die Verbindungselemente 10, 12 und 14 greifen dabei in Aufnahmebereiche der Befestigungswinkel 6, 8 ein und erzielen so eine formschlüssige Verbindung der Mittelkonsole mit den Befestigungswinkeln 6, 8. Im hinteren Bereich der Mittelkonsole bzw. dessen Grundkörpers sind zwei Schrauben 16 dargestellt, die durch entsprechende Ausnehmungen bzw. Durchgänge in dem Grundkörper 4 durchgreifen und an dem hinteren Befestigungswinkel 8 festgelegt werden können. Hierzu sind in dem hinteren Befestigungswinkel 8 die Löcher 18 vorgesehen. Diese können entweder derart ausgestaltet sein, dass die Schrauben 16 in sie eingreifen und daran befestigt werden können, oder die Löcher 18 können als reine Durchgangslöcher ausgestaltet sein, sodass die Schrauben 16 direkt am Fahrzeugboden verankert werden können.

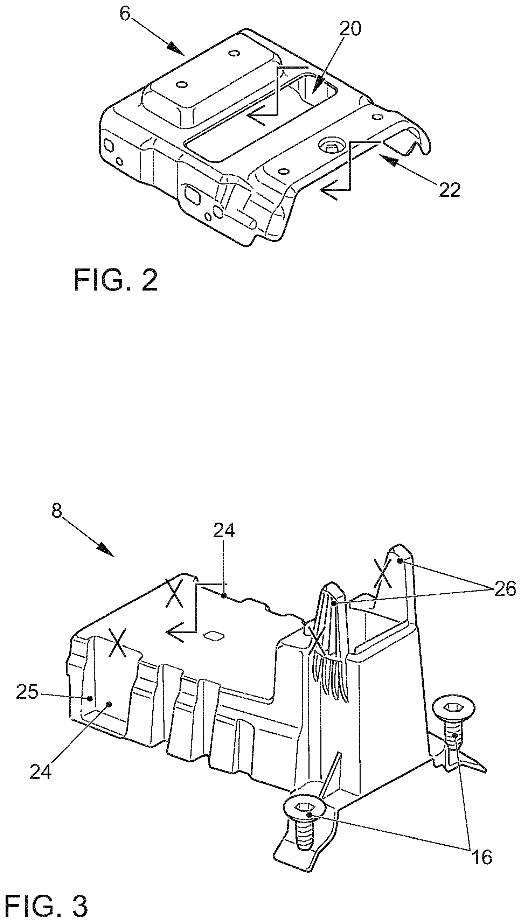

Figur 2 zeigt einen vorderen Befestigungswinkel 6 in einer vergrößerten Darstellung ohne die Mittelkonsole. Der vordere Befestigungswinkel 6 weist ein Profil auf, dass grob einem umgedrehten U entspricht. Im mittleren Bereich des vorderen Befestigungswinkels 6 ist eine Ausnehmung 20 angeordnet, in die die vorderen Verbindungselemente der Mittelkonsole eingreifen können. Nach hinten hin ist das Profil des vorderen Befestigungswinkel 6 geöffnet, sodass hier eine hintere Öffnung 22 entsteht, in die wiederum Verbindungselemente der Mittelkonsole eingreifen können. Die beiden grob S-förmigem Pfeile verdeutlichen hierbei, wie der Verbindungsvorgang kinematisch abläuft. Die beiden Pfeile beschreiben dabei die Bewegung, die die Verbindungselemente und somit die gesamte Mittelkonsole ausführen. In einem ersten Bewegungsabschnitt wird dabei eine Bewegung nach vorne, in der Figur also nach links oben, ausgeführt, um die Verbindungselemente über bzw. schräg vor den Ausnehmungen bzw. Öffnungen 20, 22 zu positionieren. In einem zweiten Bewegungsabschnitt wird dann die Mittelkonsole senkrecht abgesenkt und dann wiederum in Fügerichtung bis zu einem Anschlag bewegt, wobei nun die Verbindungselemente in die Ausnehmung 20 bzw. in die Öffnung 22 eingreifen. Die Fügerichtung entspricht dabei wieder der Bewegung nach vorne, im Normalfall also in Fahrtrichtung des Fahrzeugs.

Figur 3 zeigt einen hinteren Befestigungswinkel 8 in einer vergrößerten Darstellung ohne die Mittelkonsole. Der hintere Befestigungswinkel 8 hat eine grob kastenförmige Grundform und erstreckt sich mit im wesentlichen senkrechten Seitenwänden von dem nicht dargestellten Fußboden des Fahrzeugs aus. Es sind wiederum die beiden Schrauben 16 dargestellt, mit welchen der hintere Befestigungswinkel 8 an dem Fahrzeugboden festgelegt wird. Weiterhin sind im vorderen Bereich des hinteren Befestigungswinkels 8 zwei Mulden 24 mit vertikal verlaufenden Wänden erkennbar, in die die Verbindungselemente von oben eingreifen können. Der Pfeil beschreibt auch hier eine mögliche Bewegungsabfolge der hinteren Verbindungselemente beim Fügevorgang. Die Bewegung wird analog zu der mit Bezug auf Figur 2 beschriebenen Bewegung ausgeführt. Die Mulden 24 können eine konturierte oder mit einer Öffnung versehene vordere Wand 25 aufweisen, sodass der vordere Bereich des in der Figur nicht dargestellten Verbindungselements dort eingreifen und die Mittelkonsole so fixiert werden kann.

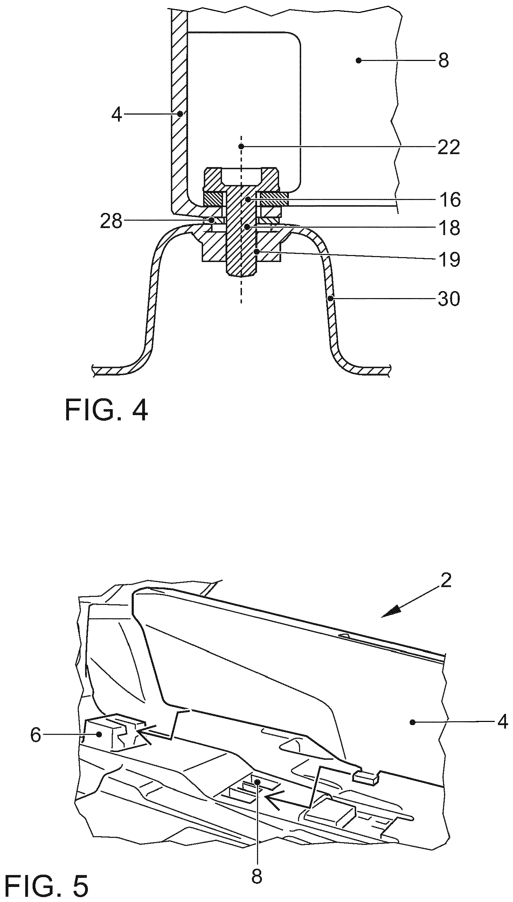

Figur 4 zeigt einen schematischen Ausschnitt eines zweiten Ausführungsbeispiels eines erfindungsgemäßen Konsolenelements, in dem eine Möglichkeit zur Verbindung des Konsolenelements mit dem Fahrzeugrohbau 30 dargestellt ist. Zentrales Verbindungselement ist hierbei die Schraube 16, die sowohl den Grundkörper 4 der Mittelkonsole, als auch den hinteren Befestigungswinkel 8 und den Fahrzeug- bzw. Karosserie-Rohbau 30, der in diesem Fall aus einem Bodenblech besteht, durchdringt. Die Schraube 16 durchdringt dabei das in dem hinteren Befestigungswinkel 8 angeordnete Loch 18 als auch ein entsprechendes, in dem Karosserierohbau 30 angeordnetes Loch und wird dann mit der Mutter 19 fixiert. Die Schraube 16 kann an dem Grundkörper 4 vor der Endmontage mittels einer Klemmscheibe 28 vorläufig befestigt sein.

Figur 5 verdeutlicht noch einmal den Bewegungsablauf, den die Mittelkonsole ausführt, wenn Sie mit dem Fahrzeug verbunden wird. Die Pfeile zeigen dabei wieder die dreiteilige Bewegung, die aus einem ersten Bewegungsabschnitt in horizontaler Richtung in Fügerichtung, einem zweiten vertikalen Bewegungsabschnitt, in dem die Mittelkonsole abgesenkt wird, und einem dritten, wiederum in horizontaler Richtung entlang der Fügerichtung ausgeführten Bewegungsabschnitt besteht. Im letzten Bewegungsabschnitt greifen dabei die an der Unterseite des Grundkörper 4 angeordneten Verbindungselemente in korrespondierende Aufnahmen, die am Fahrzeugboden angeordnet sind, ein.

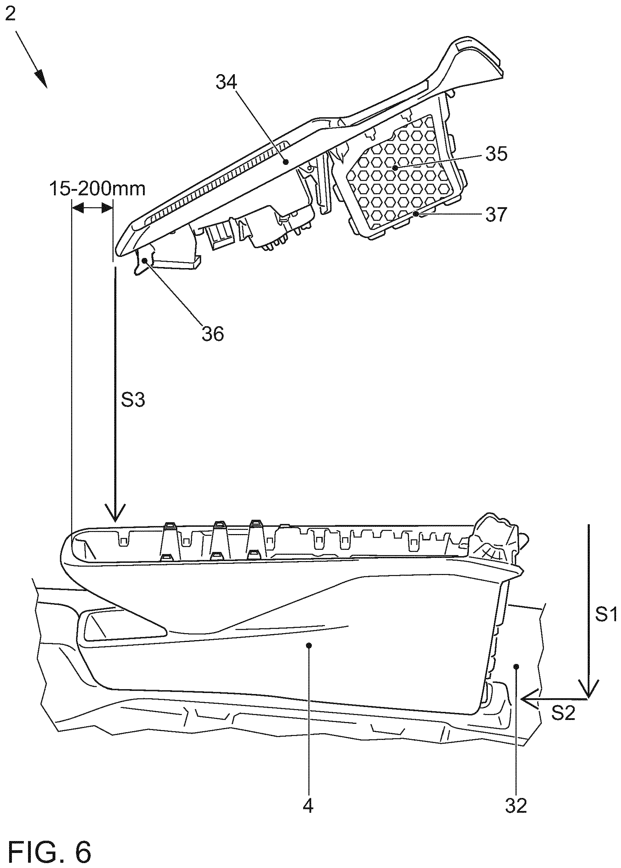

Figur 6 zeigt ein viertes Ausführungsbeispiel eines erfindungsgemäßen Konsolenelements 2, bei dem der Grundkörper 4 bereits montiert ist und ein Innenmodul 34 eingesetzt wird. Dabei sind die Schritte S1 und S2 analog zu den zuvor beschriebenen ersten und zweiten Bewegungsabschnitten bereits ausgeführt worden. In Schritt S1 wurde nach einer zuvor erfolgten groben Positionierung über der Endposition der Grundkörper 4 abgesenkt und dann in Schritt S2 horizontal nach vorne geschoben, sodass die in der Figur nicht sichtbaren Verbindungselemente sich selbstzentrierend mit dem Fahrzeugboden 32 bzw. den daran angeordneten vorderen und hinteren Befestigungswinkeln verbunden haben. Das Innenmodul 34 weist ein Staufach 35 auf, welches im dargestellten Ausführungsbeispiel im hinteren Bereich des Innenmoduls 34 angeordnet ist. Es ist nach oben hin offen, kann aber auch durch eine Klappe, eine Jalousie oder ähnliches verschlossen sein. Die Höhe des Staufachs 35 ist etwas geringer als die Höhe des Grundkörpers 4, so dass der Boden 37 des Staufachs 34 im eingebauten Zustand in der Nähe des Grundkörperbodens, also beispielsweise mit einem vertikalen Abstand von weniger als 10 cm zum Grundkörperboden, angeordnet ist.

Das Innenmodul 34 ist ebenfalls grob oberhalb seiner vorgegebenen Endposition positioniert worden. Dabei weist es eine Neigung gegenüber der vorgegebenen Endposition auf. Seine Oberfläche verläuft schräg von vorne unten nach hinten oben. Mit anderen Worten ist das Innenmodul 34 leicht nach vorne unten geneigt ausgerichtet. Es weist an einem vorderen Ende vordere Befestigungselemente 36 auf, die gleichartig zu den bereits zuvor beschriebenen Verbindungselementen aufgebaut sein können. In einem Schritt S3 wird nun das Innenmodul 34 mit einer vertikalen Bewegung abgesenkt. Der Abstand einer vorderen Kante des Innenmoduls 34 von einer inneren vorderen Kante des Grundkörpers 4 kann dabei beispielsweise zwischen 15 mm und 200 mm betragen.

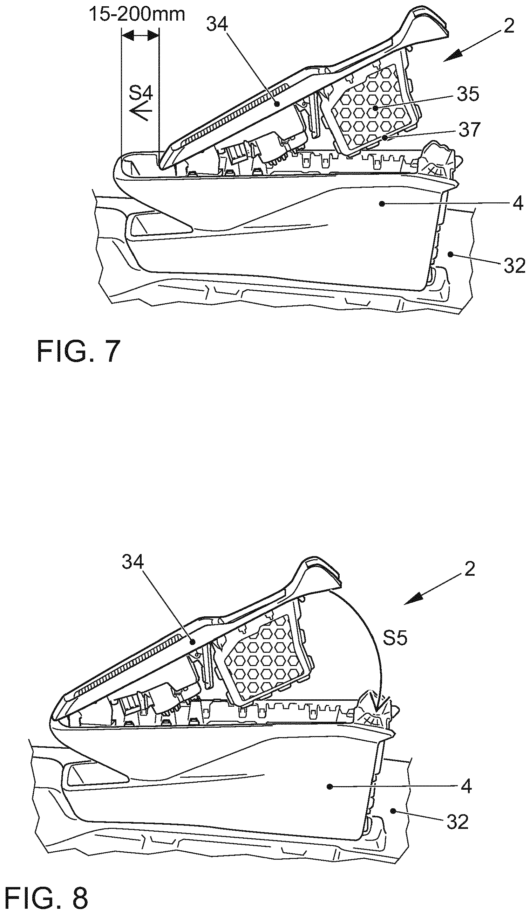

Figur 7 zeigt den Zustand nach dem Ausführen von Schritt S3. Die vorderen Befestigungselemente 36 sind nun vor entsprechenden Aufnahmen angeordnet und werden gemeinsam mit dem gesamten Innenmodul 34 in einer horizontalen Bewegung in Fügerichtung in diese Aufnahmen eingeschoben. Der Hub dieser Fügebewegung kann in Schritt S4 beispielsweise zwischen 15 und 200 mm betragen.

Figur 8 zeigt, wie in Schritt S5 eine Schwenkbewegung um die nun mit dem Grundkörper 4 verbundenen vorderen Befestigungselemente ausgeführt wird. Die Oberfläche des Innenmoduls 34 erreicht am Ende der Schwenkbewegung eine horizontale Ausrichtung und somit ihre Endposition. Der hintere Bereich des Innenmoduls 34 kann mit einer Rast- oder Schnappverbindung mit dem hinteren Bereich des Grundkörpers 4 verbunden werden. Auch andere Befestigungsmethoden, wie beispielsweise schrauben oder kleben, sind denkbar.

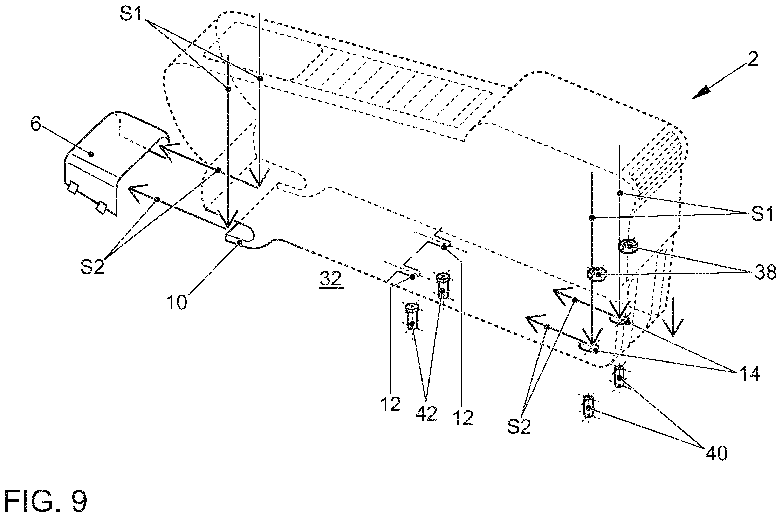

Figur 9 zeigt ein fünftes Ausführungsbeispiel eines erfindungsgemäßen Konsolenelements 2 in einer schematischen Ansicht von schräg oben. Auf dem Fahrzeugboden 32 ist ein vorderer Befestigungswinkel 6 angeordnet und befestigt, in den das Konsolenelement 2 mit seinem vorderen Verbindungselement 10 wie oben beschrieben eingreifen kann. Hierzu sind als Darstellung der zugehörigen Bewegung der Mittelkonsole die Bewegungsabschnitte S1 und S2 als Pfeile eingezeichnet. Die vorderen Verbindungselemente 10 sind dabei hakenförmig ausgestaltet.

Die mittleren Verbindungselemente 12 sind als Ausnehmungen im Boden der Mittelkonsole ausgestaltet. Sie sind nach vorne hin offen und verjüngen sich nach hinten hin, sodass der selbstzentrierende Effekt eintritt, wenn sie in Schritt S2 eine Horizontalbewegung in Fügerichtung ausführen und so die korrespondierend ausgestalteten T-Bolzen 42 umschließen wodurch eine formschlüssige Verbindung zu diesen aufgebaut wird.

Die hinteren Verbindungselemente 14 sind als Durchgangslöcher ausgestaltet, die eine Langlochform aufweisen und somit ebenfalls die Horizontalbewegung in Schritt S2 erlauben. In Schritt S1 wird die Mittelkonsole abgesenkt. Dabei durchdringen die Bolzen 40 die Durchgangslöcher. Nach der Horizontalbewegung in Schritt S2 werden die Muttern 38 an den Bolzen 40 befestigt und somit die gesamte Mittelkonsole an dem Fahrzeugboden 32 festgelegt.

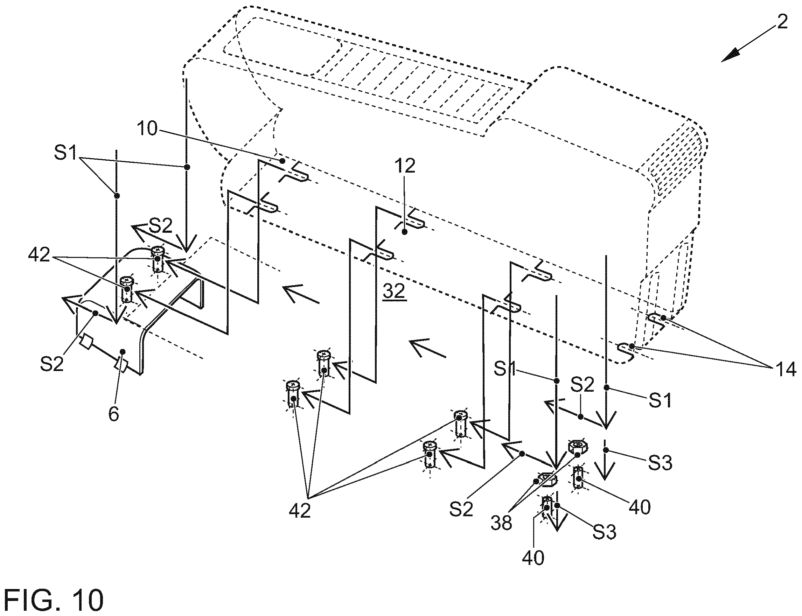

Figur 10 zeigt ein sechstes Ausführungsbeispiel eines erfindungsgemäßen Konsolenelements 2 bzw. einer erfindungsgemäßen Mittelkonsole in einer schematischen Ansicht von schräg oben. Das Ausführungsbeispiel ist ähnlich zu dem in Figur 9 dargestellten Ausführungsbeispiel ausgestaltet. Es unterscheidet sich dadurch, dass insgesamt vier mittlere Verbindungselemente 12 vorhanden sind, die in unterschiedlichen Bereichen entlang der Fügerichtung paarweise angeordnet sind. Weiterhin sind die hinteren Verbindungselemente 14 nach hinten hin offen ausgestaltet. In einer alternativen Befestigungsvariante kann die Mittelkonsole zunächst die Schritte S1 und S2 in einer leicht nach vorne geneigten Stellung ausführen. In diesem Fall durchdringen die Bolzen 40 die hinteren Verbindungselemente bzw. Durchgangslöcher während der Schritte S1 und S2 noch nicht. Dies geschieht dann erst in Schritt S3, in dem eine Schwenkbewegung durchgeführt wird, während der der hintere Teil der Mittelkonsole abgesenkt wird, sodass nun die Bolzen 40 die Durchgangslöcher durchdringen und danach wiederum mit in der Figur nicht dargestellten Muttern fixiert werden können.

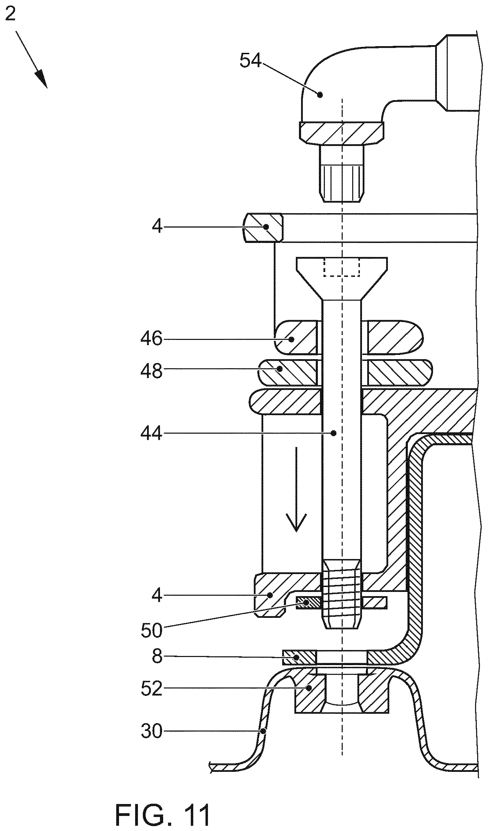

Figur 11 zeigt einen Querschnitt durch einen hinteren Bereich eines sechsten Ausführungsbeispiels einer erfindungsgemäßen Konsolenelements 2 bzw. einer Mittelkonsole. Es ist ein laschenförmiger Anteil des Karosserierohbaus 30 zu erkennen, auf dem ein hinterer Befestigungswinkel 8 aufliegt. Weiterhin ist der Grundkörper 4 dargestellt, der bereits mit mehreren weiteren Komponenten der Mittelkonsole verbunden ist. Dabei werden die einzelnen Elemente, nämlich der Grundkörper 4, ein Luftkanal 48 und eine Armlehne 46 von einer Schraube 44 miteinander verbunden. Die genannten Komponenten sind bereits vormontiert, wobei die Schraube mit ihrer Spitze eine Fixierscheibe 50 durchdringt, sodass eine Klemmwirkung aufgebaut wird, die die genannten Bauteile 4,46 und 48 miteinander verbindet.

Es ist eine Situation dargestellt, in der die Mittelkonsole bereits mit ihren Verbindungselementen in die Befestigungswinkel eingreift und ihre Endposition eingenommen hat. Zur Fixierung der Mittelkonsole in dieser Endposition kann nun die Schraube 44 mit Hilfe eines Winkelschraubers 54 angezogen werden, wobei sie in die Schweißmutter 52 eingreift, welche an der Unterseite des Tunnelblechs des Karosserierohbaus 30 angeordnet ist.

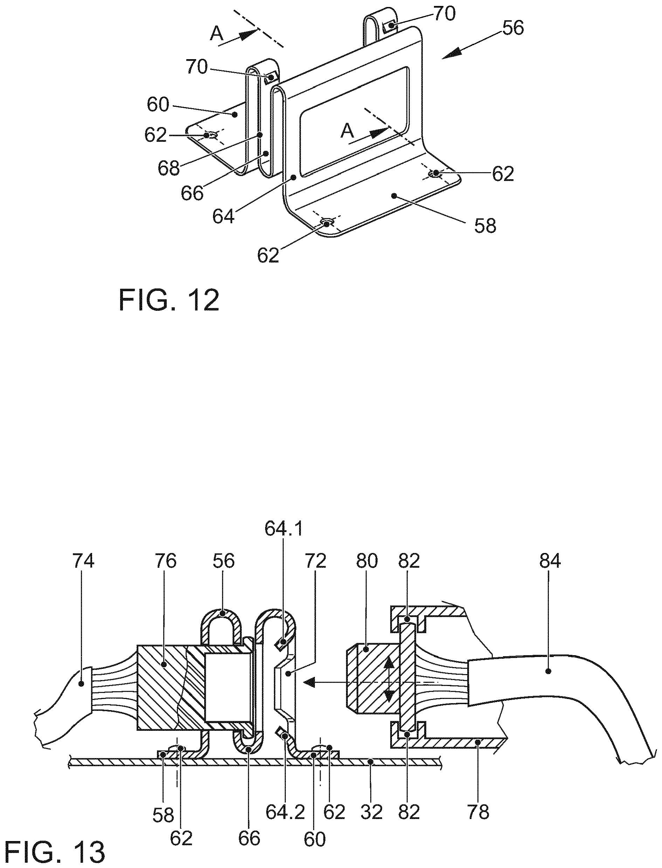

Figur 12 zeigt einen Buchsenhalter 56, der an einem Fahrzeugboden oder beispielsweise an einem vorderen Befestigungswinkel angebracht sein kann. Er besteht aus einem Blechteil, das mehrfach gebogen bzw. gefaltet ist und verschiedene Ausnehmungen aufweist. Der Buchsenhalter 56 weist eine vordere Bodenlasche 58 und eine hintere Bodenlasche 60 auf, die jeweils an den Schweißpunkten 62 mit dem Untergrund verbunden sind. Zwischen den beiden Bodenlaschen 58, 60 sind mehrere sich vertikal erstreckende Abschnitte angeordnet. Der in Fahrtrichtung gesehen hintere vertikale Abschnitt ist der Anweiserabschnitt 64, der eine Aufnahmeöffnung 72 aufweist, durch die ein nicht dargestelltes, einen Stecker aufweisendes Kabel mit einer von dem Buchsenhalter 56 gehaltenen Buchse verbunden werden kann. In Fahrtrichtung gesehen hinter dem Anweiserabschnitt 64 ist der Halteabschnitt 66 angeordnet, an dem die nicht dargestellte Buchse befestigt werden kann. Der Anweiserabschnitt 64 wird von dem Verbindungsabschnitt 68 mit dem Halteabschnitt 66 verbunden, wobei der Halteabschnitt 66 in etwa horizontal ausgerichtet ist.

Figur 13 zeigt den Buchsenhalter 56 aus Figur 12 in einem Schnitt in einer Seitenansicht. Es sind dabei wiederum der Fahrzeugboden 32, der Buchsenhalter 56, der eine vordere Bodenlasche 58, eine hintere Bodenlaschen 60 sowie die Schweißpunkte 62 aufweist, sowie ein mit einem Kabel 84 verbundener Stecker 80, der von einer Steckeraufnahme 78 gehalten wird, die mit dem ansonsten nicht dargestellten Mittelkonsolenelement verbunden ist, dargestellt. Der Buchsenhalter 56 trägt die Buchse 76, die wiederum mit dem Kabel 74 verbunden ist. Im in Fahrtrichtung gesehen hinteren Bereich des Buchsenhalters 56 sind die Anweiserabschnitte 64.1 und 64.2 angeordnet. Diese sind nach innen geneigt, sodass der Stecker 80, wenn er bei der Fügebewegung in der Figur nach links bewegt wird, zentriert und passgenau in die Buchse 76 eingeführt wird.

Der Stecker 80 wird dabei von der Steckeraufnahme 78 gehalten, wobei der Stecker ein gewisses Spiel hat, was durch die Freiräume 82, die im dargestellten Schnitt oberhalb und unterhalb des Steckers 80 zu erkennen sind, ermöglicht wird. Der Stecker 82 kann somit unabhängig vom Rest der Mittelkonsole zentriert werden, da er beim Fügevorgang eine Ausgleichsbewegung senkrecht zur Fügerichtung durchführen kann.

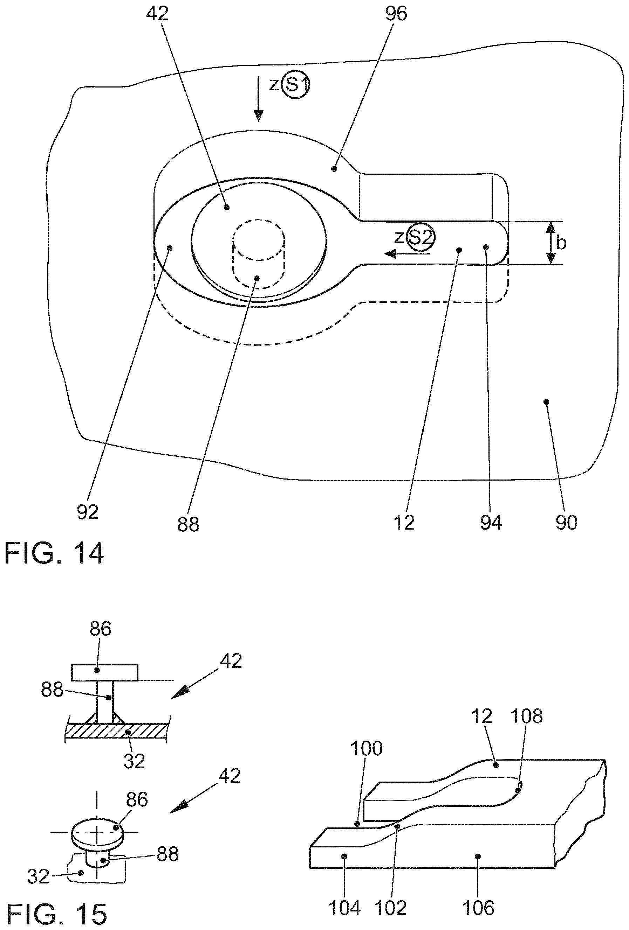

Figur 14 zeigt einen Ausschnitt eines Bodenelements 90 eines erfindungsgemäßen Konsolenelements. In dem Bodenelement 90 ist ein hinteres Verbindungselement 14 in Form einer in etwa schlüssellochförmigen Ausnehmung zu erkennen. Die Ausnehmung besteht aus einem ovalen ersten Ausnehmungsanteil 92 sowie aus einem zweiten Ausnehmungsanteil 94 der Breite b. Während der Montage der Mittelkonsole wird der erste Ausnehmungsanteil 92 über dem Kopf 86 des T-Bolzens 42 positioniert. Diese Positionierung kann mit einer relativ geringen Genauigkeit erfolgen, da der Durchmesser des ersten Ausnehmungsanteils 92 größer ist, als der Durchmesser des zweiten Ausnehmungsanteils 94. In einem ersten Schritt S1 wird dann die Mittelkonsole gemeinsam mit dem Verbindungselement 12 abgesenkt, sodass der Kopf 86 des T-Bolzens 42 den ersten Ausnehmungsanteil 92 durchdringt und sich dann oberhalb der Oberfläche des Bodenelements 90 befindet.

In einem zweiten Schritt S2 wird dann die Mittelkonsole in Fügerichtung x geschoben, wobei der zylinderförmige Stiftkörper 88 des T-Bolzens 42 in den zweiten Ausnehmungsanteil 94 eindringt. Die Breite b des zweiten Ausnehmungsanteils 94 ist geringfügig größer als der Durchmesser des Stiftkörpers 88, sodass dieser darin mit nur sehr geringem Spiel fixiert wird. In der vertikalen Richtung z wird das Verbindungselement 12 ebenfalls fixiert, da die Länge des Stiftkörpers 88 geringfügig größer ist als die Dicke des Bodenelements 90.

Figur 15 zeigt eine weitere Ausführungsvariante eines erfindungsgemäßen Verbindungselements 12. Das Verbindungselement 12 weist die Form einer nach vorne hin offenen und sich nach hinten hin verjüngenden Aufnahmeöffnung 100 in Form eines Schlitzes auf. Dieser kann während der Fügebewegung den Stiftkörper 88 des T-Bolzens 42 aufnehmen. Die Oberseite 102 des Verbindungselements 12 weist dabei einen nach hinten hin ansteigenden Mittelabschnitt auf. Mit anderen Worten vergrößert sich die Dicke des Verbindungselements 12 von einem vorderen Bereich 104 zu einem hinteren Bereich 106 hin. Während der Fügebewegung reitet der T-Bolzen 42 mit seinem Kopf 86 auf der Oberseite 102 des Verbindungselements 12 auf, bis er an dem hinteren Anschlag 108 mit seinem Stiftkörper 88 anschlägt. Dadurch, dass der Kopf 86 des T-Bolzens 42 dann auf der Oberseite 102 des Verbindungselements 12 aufreitet, ist dann auch die Vertikalposition des Verbindungselements 12 relativ zu dem T-Bolzen 42 und somit auch zu dem Fahrzeugboden 32 wohldefiniert.

Im oberen linken Bereich der Figur ist noch eine Seitenansicht eines solchen T-Bolzens 42 dargestellt. Wie bereits beschrieben besteht der T-Bolzens 42 im Wesentlichen aus einem Stiftkörper 88 und einem Kopf 86. Der T-Bolzen 42 ist auf dem Fahrzeugboden 32 angeordnet und erstreckt sich von diesem aus senkrecht nach oben.

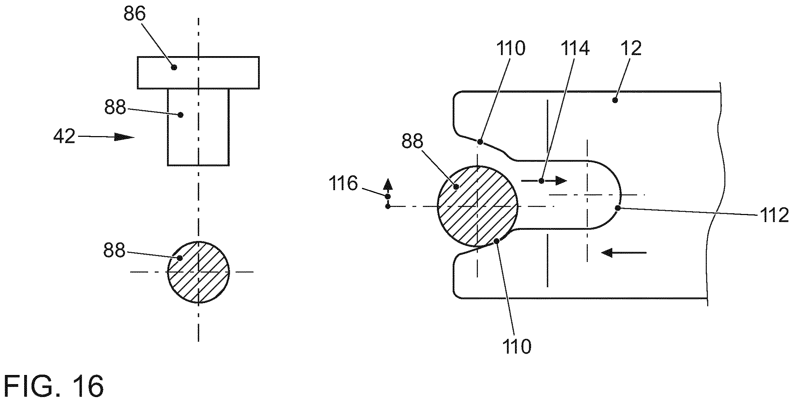

Figur 16 zeigt das Ausführungsbeispiel des Verbindungselements 12 aus Figur 15 in einer geschnittenen Draufsicht sowie im oberen linken Bereich noch einmal eine Seitenansicht des T-Bolzens 42. Der Schnitt ist in einer Höhe unterhalb des Kopfes 86 des T-Bolzens 42 ausgeführt, so dass lediglich der Stiftkörper 88 sichtbar ist. Im rechten Bereich der Figur ist eine Situation während des Einbaus des Konsolenelements dargestellt. Es wird gerade der Schritt S2 ausgeführt, das Konsolenelement ist also bereits abgesenkt worden und wird nun horizontal bewegt, um eine Verbindung zwischen den Verbindungselementen und den Befestigungswinkeln herzustellen.

Dabei hat das Verbindungselement 12 bereits Kontakt mit dem Stiftkörper 88 aufgenommen. Der Stiftkörper 88 liegt an der linken, in der Figur unten dargestellten Anweiserfläche 110 an. Es ist zu erkennen, dass die Mittelkonsole zu Beginn der Bewegung quer zur Fügerichtung nicht exakt positioniert war, sodass der Stiftkörper 88 außermittig in die Öffnung des Verbindungselements 12 eintritt. Er wird von den beiden Anweiserflächen 110, die gemeinsam eine trichterförmige Öffnung bilden, aufgenommen und führt relativ zum Verbindungselement 12 eine kleine Bewegung 116 quer zur Fügerichtung aus. In der Realität wird diese Bewegung natürlich von der gesamten Mittelkonsole in entgegengesetzter Richtung ausgeführt. Nach der Zentrierung kann sich der Stiftkörper 88 innerhalb der Öffnung des Verbindungselements 12 dann ungehindert bis zum hinteren Anschlag 112 bewegen und dort seine Endposition einnehmen.

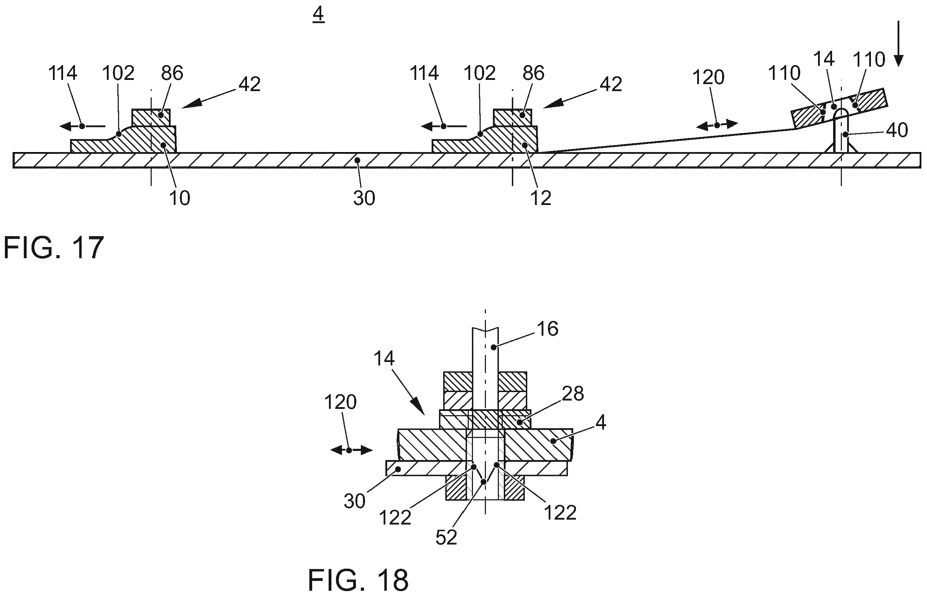

Figur 17 zeigt eine geschnittene Seitenansicht des teilweise in den Figuren 15 und 16 gezeigten Ausführungsbeispiels. Zu erkennen ist der Karosserierohbau 30 in Form eines Tunnelblechs, an dem die T-Bolzen 42 sowie der Bolzen 40, in Form eines Schweißbolzens, angebracht sind. Die Mittelkonsole ist lediglich vereinfacht dargestellt. Sie weist das vordere Verbindungselement 10, das mittlere Verbindungselement 12 und das hintere Verbindungselement 14 auf. Die Verbindungselemente 10 und 12 sind dabei gleichartig ausgestaltet und entsprechen dem in Figur 15 dargestellten Verbindungselement. Die Mittelkonsole ist bereits abgesenkt und durch Ausführen der Einschubbewegung 114 in Fügerichtung verschoben worden. Die Köpfe 86 der T-Bolzen 42 sind dabei auf den relativ zur Fügerichtung leicht geneigten Oberseiten 102 der Verbindungselemente 10, 12 aufgeritten und haben so die Mittelkonsole in ihrer Vertikalposition zentriert und fixiert. Die Mittelkonsole ist dabei aber noch leicht gekippt geblieben, so dass das im Wesentlichen aus einer Öffnung bestehende hintere Verbindungselement 14 nun über den Bolzen 40 gestülpt werden kann. Das hintere Verbindungselement 14 weist dabei relativ zur Vertikalen geneigte Anweiserflächen 110 auf, die durch ihr Zusammenwirken mit dem Bolzen 40 eine Zentrierung der Mittelkonsole auch in Fügerichtung bewirken. Die Seitenflächen des Bolzens40 gleiten dabei an den Anweiserflächen 110 ab, so dass sich am Ende die gewünschte Position der Mittelkonsole einstellt. Diese Zentrierungsbewegung ist in der Figur durch den Pfeil 120 dargestellt.

Figur 18 zeigt eine alternative Ausführung des hinteren Verbindungselements 14. Dieses ist ähnlich zu dem in Figur 11 dargestellten Ausführungsbeispiel aufgebaut. In der Figur ist eine Schraube 16 erkennbar, die den Grundkörper 4 der Mittelkonsole sowie eine Fixierscheibe bzw. Klemmscheibe 28 durchdringt. In dem Karosserierohbau 30 bzw. Tunnelblech ist ebenfalls eine Öffnung angeordnet, die von der Schraube 16 durchdrungen wird, sodass diese von der Schweißmutter 52 fixiert werden kann. Das hintere Verbindungselement 14 weist dabei im Bereich des Karosserierohbaus 30 bzw. im Bereich der Schweißmutter 52 ebenfalls geneigte Anweiserflächen 122 auf, die eine Zentrierung der Schraube 16 und somit des gesamten Konsolenelements 2 bewirken.

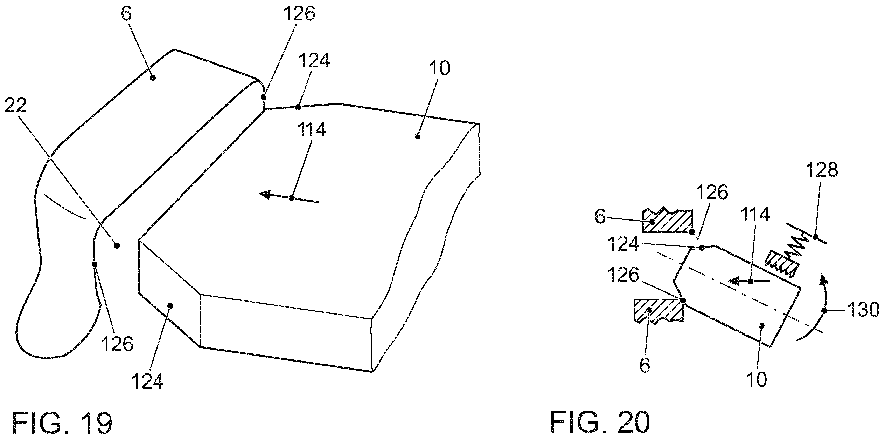

Figur 19 zeigt eine Detaildarstellung des in Figur 9 dargestellten Ausführungsbeispiels. Es ist das vordere Verbindungselement 10 dargestellt, welches im Begriff ist, durch Ausführen der Einschubbewegung 114 in die hintere Öffnung 22 des vorderen Befestigungswinkels 6 einzudringen. Das Verbindungselement 10 ist laschenartig bzw. zungenartig ausgestaltet und weist im Bereich seiner vorderen Ecken abgeschrägte Anweiserflächen 124 auf, welche in Verbindung mit den Stützkanten 126, die horizontal ausgerichtet und an der dem Verbindungselement 10 zugewandten Seite des vorderen Befestigungswinkels 6 angeordnet sind, die Selbstzentrierung des Verbindungselements 10 quer zur Fügerichtung bewirken. Eine der Anweiserflächen 124 kommt dabei mit einer der Stützkanten 126 in Kontakt und gleitet an dieser ab, wodurch sich eine Relativbewegung zwischen Verbindungselement 10 und dem vorderen Befestigungswinkel 6 ergibt.

Alternativ oder zusätzlich wäre es natürlich auch möglich, dass die Stützkanten 126 des vorderen Befestigungswinkels 6, die an der dem Verbindungselement 10 zugewandten Seite des vorderen Befestigungswinkels 6 angeordnet sind, abgeschrägte Anweiserflächen aufweisen, welche die Selbstzentrierung des vorderen Verbindungselements 10 quer zur Fügerichtung mit dem vorderen Befestigungswinkel 6 bewirken.

In Figur 20 ist dargestellt, dass durch die erfindungsgemäße Ausgestaltung neben einer linearen selbstzentrierenden Bewegung auch eine Korrektur der Ausrichtung der Mittelkonsole in Form einer Schwenkbewegung bzw. Ausrichtbewegung 130 erreichbar ist. Dargestellt ist eine geschnittene Draufsicht auf das Ausführungsbeispiel aus Figur 19. Dabei weist die Mittelachse des Verbindungselements 10 in der dargestellten Situation einen nicht gewünschten Winkel zu der Mittelachse des vorderen Befestigungswinkels 6 auf. Durch den Kontakt einer der Anweiserflächen 124 mit der Stützkante 126 wird in Verbindung mit der von dem Greifer 128 ausgeübten Kraft ein Drehmoment auf das Verbindungselement 10 und somit auf die gesamte Mittelkonsole ausgeübt, die zu einer Schwenkbewegung bzw. Ausrichtbewegung 130 führt, wodurch die Mittelkonsole dann korrekt ausgerichtet wird. Dies wird in äquivalenter Weise ebenfalls realisiert, wenn die Stützkanten 126 des vorderen Befestigungswinkels 6, die an der dem Verbindungselement 10 zugewandten Seite des vorderen Befestigungswinkels 6 angeordnet sind, abgeschrägte Anweiserflächen aufweisen, welche die Selbstzentrierung des vorderen Verbindungselements 10 quer zur Fügerichtung mit dem vorderen Befestigungswinkel 6 bewirken.

### Bezugszeichenliste

- 2: Konsolenelement
- 4: Grundkörper
- 5: Grundkörperboden
- 6: vorderer Befestigungswinkel
- 8: hinterer Befestigungswinkel
- 10: vorderes Verbindungselement
- 12: mittleres Verbindungselement
- 14: hinteres Verbindungselement
- 15: Seitenwand
- 16: Schraube
- 18: Loch
- 19: Mutter
- 20: Ausnehmung
- 22: hintere Öffnung
- 24: Mulde
- 25: vordere Wand
- 26: Vorsprung
- 28: Klemmscheibe
- 30: Karosserierohbau
- 32: Fahrzeugboden
- 34: Innenmodul
- 35: Staufach
- 36: vorderes Befestigungselement
- 37: Staufachboden
- 38: Mutter
- 40: Bolzen
- 42: T-Bolzen
- 44: Schraube
- 46: Armlehne
- 48: Luftkanal
- 50: Fixierscheibe
- 52: Schweißmutter
- 54: Winkelschrauber
- 56: Halterung, Buchsenhalter
- 58: vordere Bodenlasche
- 60: hintere Bodenlasche
- 62: Schweißpunkt
- 64: Anweiserabschnitt
- 66: Halteabschnitt
- 68: Verbindungsabschnitt
- 70: Rastelemente
- 72: Aufnahmeöffnung
- 74: Kabel
- 76: zweites elektrisches Verbindungselement, Buchse
- 78: Steckeraufnahme
- 80: elektrisches Verbindungselement, Stecker
- 82: Freiraum
- 84: Kabel
- 86: Kopf
- 88: Stiftkörper
- 90: Bodenelement
- 92: 1. Ausnehmungsanteil
- 94: 2. Ausnehmungsanteil
- 96: Seitenwand
- 98: Stiftkörper
- 100: Aufnahmeöffnung, Schlitz
- 102: Oberseite
- 104: vorderer Bereich
- 106: hinterer Bereich
- 108: hinterer Anschlag
- 110: Anweiserfläche
- 112: hinterer Anschlag
- 114: Einschubbewegung
- 116: Korrekturbewegung
- 118: Anweiserflächen
- 120: Justierbewegung
- 122: Anweiserfläche
- 124: Anweiserfläche
- 126: Stützkante
- 128: Greifer
- 130: Ausrichtbewegung
- S1: Absenkbewegung
- S2: horizontale Bewegung
- S3: Absenkbewegung
- S4: horizontale Bewegung
- S5: Schwenkbewegung
- b: Breite
- x: Fügerichtung
- z: vertikale Richtung

## Patentansprüche

1. Konsolenelement (2) zum Verbinden mit einem Fahrzeugboden (32) eines Fahrzeugs, mit einem Grundkörper (4), der einen Grundkörperboden (5) und Grundkörperseitenwände (15) aufweist, und mit vorderen Verbindungselementen (10) und hinteren Verbindungselementen (14), die jeweils an einer Unterseite des Grundkörperbodens (5) angeordnet sind und mittels einer horizontalen Bewegung des Grundkörpers entlang einer Fügerichtung (x) in an dem Fahrzeugboden (32) des Fahrzeugs angeordnete Aufnahmen eingeschoben werden können, **dadurch gekennzeichnet, dass** die vorderen Verbindungselemente (10) und die hinteren Verbindungselemente (14) selbstzentrierend ausgestaltet sind.

2. Konsolenelement (2) nach dem vorstehenden Anspruch, **dadurch gekennzeichnet, dass** die vorderen Verbindungselemente (10) und/oder die hinteren Verbindungselemente (14) derart ausgestaltet sind, dass sich eine Breite einer Aufnahmeöffnung der vorderen Verbindungselemente (10) und/oder eine Breite einer Aufnahmeöffnung (100) der hinteren Verbindungselemente (14) entlang einer Fügerichtung (x) von einem vorderen Bereich (104) zu einem hinteren Bereich (106) hin verkleinert.

3. Konsolenelement (2) nach einem der vorstehenden Ansprüche, **dadurch gekennzeichnet, dass** die vorderen Verbindungselemente (10) und/oder die hinteren Verbindungselemente (14) entlang einer Fügerichtung (x) in ihrer vertikalen Ausdehnung zunehmen, so dass während eines Fügevorgangs eine Selbstzentrierung des Konsolenelements (2) in einer vertikalen Richtung (z) erfolgt.

4. Konsolenelement (2) nach einem der vorstehenden Ansprüche, **gekennzeichnet durch** in einem mittleren Bereich der Unterseite des Grundkörperbodens (5) angeordnete mittlere Verbindungselemente (12), die gleichartig zu den vorderen Verbindungselementen (10) oder gleichartig zu den hinteren Verbindungselementen (14) ausgestaltet sind.

5. Konsolenelement (2) nach einem der vorstehenden Ansprüche, **dadurch gekennzeichnet, dass** das Konsolenelement (2) Aufnahmen für Schrauben (16, 44) aufweist, mittels derer das Konsolenelement (2) an einem Fahrzeugboden (32) festgelegt werden kann, wobei jede Aufnahme eine Durchgangsrichtung aufweist, und wobei die Aufnahmen derart ausgerichtet sind, dass alle Durchgangsrichtungen der Aufnahmen parallel zueinander verlaufen.

6. Konsolenelement (2) nach einem der vorstehenden Ansprüche, **dadurch gekennzeichnet, dass** es zumindest eine Schraube (44) aufweist, die eine Mehrzahl von Einzelteilen (4, 46, 48) des Konsolenelements miteinander verbindet und gleichzeitig dazu eingerichtet ist, das Konsolenelement (2) an dem Fahrzeugboden (32) festzulegen.

7. Konsolenelement nach einem der vorstehenden Ansprüche, **gekennzeichnet durch** ein elektrisches Kabel (84), das ein elektrisches Verbindungselement (80) in Form eines Steckers oder einer Buchse aufweist, das entlang der Fügerichtung (x) ausgerichtet ist und das von einer Halterung gehalten wird, die derart ausgestaltet ist, dass das elektrische Verbindungselement (80) in einer horizontalen Richtung (x) und/oder in einer vertikalen Richtung (z) in einem kleinen Bereich beweglich ist.

8. System mit einem Konsolenelement gemäß einem der Ansprüche 1 bis 7, wobei die Aufnahmen durch einen vorderem Befestigungswinkel (6) und einen hinterem Befestigungswinkel (8) zur Verbindung des Konsolenelements (2) mit einem Fahrzeugboden (32) eines Fahrzeugs ausgebildet sind, **dadurch gekennzeichnet, dass** zumindest eines der beiden Bauteile von vorderem Befestigungswinkel (6) und vorderem Verbindungselement (10) bzw. hinterem Befestigungswinkel (8) und hinterem Verbindungselement (14) jeweils Anweiserflächen aufweisen, die mit dem jeweils anderem Bauteil derart zusammenwirken, dass während eines Fügevorgangs eine Selbstzentrierung des Konsolenelements (2) erfolgt.

9. System mit einem Konsolenelement gemäß einem der Ansprüche 1 bis 7, wobei die Aufnahmen durch einen vorderem Befestigungswinkel (6) und einen hinterem Befestigungswinkel (8) zur Verbindung des Konsolenelements (2) mit einem Fahrzeugboden (32) eines Fahrzeugs ausgebildet sind, **dadurch gekennzeichnet, dass** der vordere Befestigungswinkel (6) und der hintere Befestigungswinkel (8) jeweils Anweiserflächen aufweisen, die jeweils mit dem vorderen Verbindungselement (10) des Konsolenelements bzw. mit dem hinteren Verbindungselement (14) des Konsolenelements derart zusammenwirken, dass während eines Fügevorgangs eine Selbstzentrierung des Konsolenelements (2) erfolgt.

10. System nach einem der Ansprüche 8 und 9, **dadurch gekennzeichnet, dass** der vordere Befestigungswinkel (6) oder der hintere Befestigungswinkel (8) eine Halterung für ein zu dem elektrischen Verbindungselement (80) des Konsolenelements (2) komplementäres, zweites elektrisches Verbindungselement (76) aufweist, und dass die Halterung (56) Anweiserelemente (64.1, 64.2) zum Zentrieren des elektrischen Verbindungselements (80) des Konsolenelements (2) während des Fügevorgangs aufweist.

11. Verfahren zum Verbinden eines Konsolenelements (2) gemäß einem der Ansprüche 1-7 mit einem Fahrzeugboden (32) eines Fahrzeugs, mit den Schritten
a. Verbinden eines nach oben offenen Grundkörpermoduls , das an einer Unterseite des Grundkörpermoduls Verbindungselemente (10, 12, 14) zum Verbinden des Grundkörpermoduls mit dem Fahrzeugboden aufweist, indem eine horizontale Fügebewegung entlang einer Fügerichtung (x) ausgeführt wird,
b. Herstellen einer elektrischen Verbindung zwischen zumindest einem in dem Grundkörpermodul angeordnetem Kabel (84) und einem in dem Fahrzeug angeordneten Kabel (74),
c. Verbinden eines Innenmoduls (34), das zumindest ein Staufach (35) mit einem Staufachboden (37) aufweist, mit dem Grundmodul (4), wobei sich der Staufachboden (37) nach dem Verbinden in der Nähe des Grundkörperbodens (5) befindet.

12. Kraftfahrzeug, insbesondere Personenkraftwagen, umfassend ein Konsolenelement (2) gemäß einem der Ansprüche 1-7 oder ein System mit einem Konsolenelement (2) gemäß einem der Ansprüche 8 bis 10.

## Claims

1. Console element (2) for connection to a vehicle floor (32) of a vehicle, comprising a main body (4) which has a main body base (5) and main body side walls (15), and comprising front connecting elements (10) and rear connecting elements (14), which are each arranged on an underside of the main body base (5) and, by means of a horizontal movement of the main body along a joining direction (x), can be inserted into receptacles arranged on the vehicle floor (32) of the vehicle, **characterized in that** the front connecting elements (10) and the rear connecting elements (14) are configured to be self-centring.

2. Console element (2) according to the preceding claim, **characterized in that** the front connecting elements (10) and/or the rear connecting elements (14) are configured in such a way that a width of a receiving opening of the front connecting elements (10) and/or a width of a receiving opening (100) of the rear connecting elements (14) decreases along a joining direction (x) from a front area (104) to a rear area (106).

3. Console element (2) according to one of the preceding claims, **characterized in that** the front connecting elements (10) and/or the rear connecting elements (14) increase in their vertical extent along a joining direction (x), so that during a joining operation, the console element (2) is self-centred in a vertical direction (z).

4. Console element (2) according to one of the preceding claims, **characterized by** central connecting elements (12) which are arranged in a central area of the underside of the main body base (5) and which are configured in the same way as the front connecting elements (10) or in the same way as the rear connecting elements (14).

5. Console element (2) according to one of the preceding claims, **characterized in that** the console element (2) has receptacles for screws (16, 44), by means of which the console element (2) can be fixed to a vehicle floor (32), wherein each receptacle has a passage direction and wherein the receptacles are aligned in such a way that all the passage directions of the receptacles run parallel to one another.

6. Console element (2) according to one of the preceding claims, **characterized in that** it has at least one screw (44), which connects a plurality of individual parts (4, 46, 48) of the console element to one another and, at the same time, is set up to fix the console element (2) to the vehicle floor (32).

7. Console element according to one of the preceding claims, **characterized by** an electrical cable (84) which has an electrical connecting element (80) in the form of a plug or a socket, which is aligned along the joining direction (x) and which is held by a holder, which is configured such that the electrical connecting element (80) can be moved in a horizontal direction (x) and/or in a vertical direction (z) in a small area.

8. System having a console element according to one of Claims 1 to 7, wherein the receptacles are formed by a front angle bracket (6) and a rear angle bracket (8) for connecting the console element (2) to a vehicle floor (32) of a vehicle, **characterized in that** at least one of the two components comprising front angle bracket (6) and front connecting element (10) or rear angle bracket (8) and rear connecting element (14) each has/have guide surfaces which cooperate with the respective other component in such a way that the console element (2) is self-centred during a joining operation.

9. System having a console element according to one of Claims 1 to 7, wherein the receptacles are formed by a front angle bracket (6) and a rear angle bracket (8) connecting the console element (2) to a vehicle floor (32) of a vehicle, **characterized in that** the front angle bracket (6) and the rear angle bracket (8) each have guide surfaces which cooperate with the front connecting element (10) of the console element and with the rear connecting element (14) of the console element in such a way that the console element (2) is self-centred during a joining operation.

10. System according to one of Claims 8 and 9, **characterized in that** the front angle bracket (6) or the rear angle bracket (8) has a holder for a second electrical connecting element (76) that is complementary to the electrical connecting element (80) of the console element (2), and **in that** the holder (56) has guide elements (64.1, 64.2) for centring the electrical connecting element (80) of the console element (2) during the joining operation.

11. Method for connecting a console element (2) according to one of Claims 1-7 to a vehicle floor (32) of a vehicle, having the steps
a. connecting a main body module, which is open at the top and which has connecting elements (10, 12, 14) on an underside of the main body module for connecting the main body module to the vehicle floor by a horizontal joining movement along a joining direction (x) being carried out,
b. producing an electrical connection between at least one cable (84) arranged in the main body module and a cable (74) arranged in the vehicle,
c. connecting an inner module (34), which has at least one stowage compartment (35) with a stowage compartment base (37), to the base module (4), wherein the stowage compartment base (37) is located in the vicinity of the main body base (5) following the connection.

12. Motor vehicle, in particular passenger car, comprising a console element (2) according to one of Claims 1-7 or a system having a console element (2) according to one of Claims 8 to 10.

## Revendications

1. Élément de console (2) destiné à être relié à un plancher (32) d'un véhicule, comportant un corps de base (4), qui comprend un fond de corps de base (5) et des parois latérales de corps de base (15), et comportant des éléments de liaison avant (10) et des éléments de liaison arrière (14), qui sont disposés respectivement sur un côté inférieur du fond de corps de base (5) et peuvent être insérés dans des logements disposés sur le plancher (32) du véhicule par un mouvement horizontal du corps de base le long d'une direction d'assemblage (x), **caractérisé en ce que** les éléments de liaison avant (10) et les éléments de liaison arrière (14) sont à centrage automatique.

2. Élément de console (2) selon la revendication précédente, **caractérisé en ce que** les éléments de liaison avant (10) et/ou les éléments de liaison arrière (14) sont configurés de telle sorte qu'une largeur d'une ouverture de logement des éléments de liaison avant (10) et/ou une largeur d'une ouverture de logement (100) des éléments de liaison arrière (14) diminue le long d'une direction d'assemblage (x) à partir d'une région avant (104) vers une région arrière (106).

3. Élément de console (2) selon l'une des revendications précédentes, **caractérisé en ce que** l'étendue verticale des éléments de liaison avant (10) et/ou des éléments de liaison arrière (14) augmente le long d'une direction d'assemblage (x), de sorte que, pendant une opération d'assemblage, un centrage automatique de l'élément de console (2) dans une direction verticale (z) ait lieu.

4. Élément de console (2) selon l'une des revendications précédentes, **caractérisé par** des éléments de liaison centraux (12) disposés dans une région centrale du côté inférieur du fond de corps de base (5), lesquels éléments de liaison centraux sont configurés de façon similaire aux éléments de liaison avant (10) ou de façon similaire aux éléments de liaison arrière (14).

5. Élément de console (2) selon l'une des revendications précédentes, **caractérisé en ce que** l'élément de console (2) comprend des logements pour des vis (16, 44) au moyen desquelles l'élément de console (2) peut être fixé à un plancher de véhicule (32), chaque logement présentant une direction de passage, et les logements étant orientés de telle sorte que toutes les directions de passage des logements s'étendent parallèlement les unes aux autres.

6. Élément de console (2) selon l'une des revendications précédentes, **caractérisé en ce qu'**il comprend au moins une vis (44) qui relie une pluralité de parties individuelles (4, 46, 48) de l'élément de console les unes aux autres et est conçue en même temps pour fixer l'élément de console (2) au plancher de véhicule (32).

7. Élément de console selon l'une des revendications précédentes, **caractérisé par** un câble électrique (84) qui comprend un élément de raccordement électrique (80) sous la forme d'un connecteur ou d'une douille, lequel est orienté le long de la direction d'assemblage (x) et lequel est retenu par un élément de retenue qui est configuré de telle sorte que l'élément de raccordement électrique (80) soit mobile dans une direction horizontale (x) et/ou dans une direction verticale (z) dans une petite région.

8. Système comportant un élément de console selon l'une des revendications 1 à 7, les logements étant formés par une équerre de fixation avant (6) et une équerre de fixation arrière (8) pour la liaison de l'élément de console (2) à un plancher (32) d'un véhicule, **caractérisé en ce qu'**au moins l'un des deux composants parmi l'équerre de fixation avant (6) et l'élément de liaison avant (10) ou l'équerre de fixation arrière (8) et l'élément de liaison arrière (14) comprend respectivement des surfaces de guidage qui coopèrent avec l'autre composant respectif de telle sorte que, pendant une opération d'assemblage, un centrage automatique de l'élément de console (2) ait lieu.

9. Système comportant un élément de console selon l'une des revendications 1 à 7, les logements étant formés par une équerre de fixation avant (6) et une équerre de fixation arrière (8) pour la liaison de l'élément de console (2) à un plancher (32) d'un véhicule, **caractérisé en ce que** l'équerre de fixation avant (6) et l'équerre de fixation arrière (8) comprennent respectivement des surfaces de guidage qui coopèrent respectivement avec l'élément de liaison avant (10) de l'élément de console ou avec l'élément de liaison arrière (14) de l'élément de console de telle sorte que, pendant une opération d'assemblage, un centrage automatique de l'élément de console (2) ait lieu.

10. Système selon l'une des revendications 8 et 9, **caractérisé en ce que** l'équerre de fixation avant (6) ou l'équerre de fixation arrière (8) comprend un élément de retenue pour un deuxième élément de raccordement électrique (76) complémentaire à l'élément de raccordement électrique (80) de l'élément de console (2), et **en ce que** l'élément de retenue (56) comprend des éléments de guidage (64.1, 64.2) pour le centrage de l'élément de raccordement électrique (80) de l'élément de console (2) pendant l'opération d'assemblage.

11. Procédé de liaison d'un élément de console (2) selon l'une des revendications 1 à 7 à un plancher (32) d'un véhicule, comportant les étapes de
a. liaison d'un module de corps de base ouvert vers le haut, lequel comprend, sur un côté inférieur du module de corps de base, des éléments de liaison (10, 12, 14) pour la liaison du module de corps de base au plancher de véhicule, par le fait qu'un mouvement d'assemblage horizontal est effectué le long d'une direction d'assemblage (x),
b. réalisation d'un raccordement électrique entre au moins un câble (84) disposé dans le module de corps de base et un câble (74) disposé dans le véhicule,
c. liaison d'un module interne (34), qui comprend au moins un compartiment de rangement (35) doté d'un fond de compartiment de rangement (37), au module de base (4), le fond de compartiment de rangement (37) se trouvant à proximité du fond de corps de base (5) après la liaison.

12. Véhicule automobile, en particulier voiture particulière, comportant un élément de console (2) selon l'une des revendications 1 à 7 ou un système comportant un élément de console (2) selon l'une des revendications 8 à 10.
